# EUROPEAN PATENT APPLICATION

(11) **EP 3 454 261 A1**
(43) Date of publication of application: **13.03.2019**
(21) Application number: 18192099.2
(22) Date of filing: 31.08.2018
(51) Int. Cl.: G06N 3/04, G06N 3/08

(54) **APPARATUS AND METHOD TO PROCESS AND CLUSTER DATA**

(30) Priority: 01.09.2017 US 201762553177 P
(71) Applicant: THOMSON LICENSING, 92130 Issy les Moulineaux (FR)
(72) Inventor: Eriksson, Brian Charles, San Jose, California 95124 (US); SUN, Yifan, Mountain View, California 94043 (US); ZHANG, Dejiao, Ann Arbor, Michigan 48105 (US)
(74) Representative: Vidon Brevets & Stratégie

(57) **Abstract**

A system for applications including but not limited to machine learning and unsupervised learning for clustering of data processes an input dataset in a plurality of autoencoders where each autoencoder is configured to produce an indication of a particular structure included in the input dataset and an aggregator combines the indications produced by the plurality of autoencoders based on a weighting vector to produce a weighted combination of the indications that may be used to train the system to create a sparse representation of unlabeled datasets.

## Description

### TECHNICAL FIELD

The present principles relate generally to machine learning systems for processing data such as unlabeled data.

### BACKGROUND

One approach to processing data for applications such as classifying or categorizing data is to use machine learning systems. For example, it may be desirable to process and classify data into categories such as different types of images and/or identify images or objects in images, and/or categorize data by ratings, etc. Machine learning problems usually divide into supervised learning (where the model has access to labels) and unsupervised learning (where there are no labels). In many "big data" regimes, a key problem emerges from a lack of labeled data. These labels could be classifications, ratings, etc. While deep learning approaches have proven powerful on labeled data problems, unlabeled data problems (e.g., clustering) still prove challenging.

One of the key unsupervised deep learning architectures is an autoencoder. An autoencoder takes input data, runs the data through many layers of a deep learning model, reduce the dimensionality of the data (thus eliminating some information), and then expands the data and tries to replicate the original input. This model has been shown to have power when working on noisy or missing data.

Unfortunately, when the input data comes from a disparate data source, the autoencoder model size must grow as well. This increased model complexity can cause problems such as increased memory usage, more computational load, and excessive power consumption (particularly on mobile devices). Finally, having an overly complex model often leads to model over-fitting to training data, thus requiring the model design to consider and test multiple regularization techniques - a time consuming process.

### SUMMARY

These and other drawbacks and disadvantages of the prior art are addressed by the present principles, which are directed to processing data using machine learning systems.

According to an aspect of the present principles, there is provided in an exemplary embodiment a system for processing input data, wherein the system comprises a processor including a plurality of relatively simple autoencoders instead of one complex autoencoder, each autoencoder is configured to represent a segment of the input data space, an aggregator combining the respective plurality of outputs of the plurality of autoencoders to produce a weighted combination of the autoencoder outputs, wherein the aggregator combines the outputs of the autoencoders in accordance with a mixture parameter selected to create in the output data a reconstructed version of the input data.

In accordance with another aspect, the present principles include recognition that many datasets comprise a mixture of different types of data that individually has significant structure and hence could be well represented by a simple autoencoder. For example, consider the handwritten digits "9" vs. the digits of "1". In accordance with the present principles, a first autoencoder may be configured such that a structure such as a digit "9" is a best fit for the first autoencoder (i.e., the first autoencoder has learned or been trained to provide an indication of the input data including a structure of a digit "9") while a second autoencoder may be configured such that a such as a digit "1" would be a best fit for the second autoencoder (i.e., the second autoencoder has learned or been trained to provide an indication of the input data including a structure of a digit "1"). The results are two simple models that capture the underlying structure of the data.

In accordance with another aspect, in addition to reconstructing the input data, an embodiment comprising a mixture of autoencoders returns an assignment of each input data point to a data cluster, thereby creating a sparse representation of the input data.

In accordance with another aspect, the sparse representation produced may be incorporated into one or more exemplary embodiments providing functions including but not limited to semi-supervised classification, representation learning, and unsupervised clustering.

In accordance with another aspect, an embodiment of an exemplary apparatus in accordance with the present principles comprise a plurality of autoencoders, each of the plurality of autoencoders receiving an input dataset including a plurality of data points and each of the plurality of autoencoders processing the input dataset to each produce a respective one of a plurality of indications of an association of each of the plurality of data points with a respective one of a plurality of structures; a controller responsive to the input dataset to provide a weighting vector including a plurality of weighting values each associated with a respective one of the plurality of indications; an aggregator combining the plurality of indications based on the weighting vector to provide a weighted combination of the plurality of indications, wherein the weighted combination corresponds to a reconstruction of the input data; and an error module determining an error between the reconstruction and the input data, wherein the controller is responsive to the error to adjust the weighting vector to reduce the error.

In accordance with another aspect, in an embodiment the input dataset represents a mixture of a plurality of features, each of the plurality of features including at least one of the plurality of structures; and wherein each of the plurality of autoencoders is configured to produce a respective one of the plurality of indications to indicate an association of one or more of the data points of the input dataset with a respective one of the plurality of structures.

In accordance with another aspect, in an embodiment the controller comprises a machine learning network responsive to the input dataset and the error to learn the association of the plurality of data points of the input dataset with the plurality of structures and to process a second dataset including a second plurality of data points to assign each of the second plurality of data points to one of a plurality of data clusters representing a sparse representation of the second dataset.

In accordance with another aspect, in an embodiment the machine learning network comprises a convolutional neural network.

In accordance with another aspect, in an embodiment the machine learning network comprises a deep learning network with a softmax output.

In accordance with another aspect, in an embodiment each of the plurality of weighting values of the weighting vector corresponds to a weight to be applied to a respective one of the plurality of indications produced by the plurality of autoencoders.

In accordance with another aspect, in an embodiment one of the plurality of weighting values of the weighting vector has a value of one and the other ones of the plurality of weighting values have values of zero, thereby providing a one-hot vector as the weighting vector.

In accordance with another aspect, an embodiment is operative to provide a function comprising at least one of semi-supervised classification, representation learning, and unsupervised clustering.

In accordance with another aspect, in an embodiment a processor processes information to be provided to a user responsive to the sparse representation to adapt the information provided to the user.

In accordance with another aspect, in an embodiment a method comprises processing an input dataset including a plurality of data points in each of a plurality of autoencoders, wherein each autoencoder produces a respective one of a plurality of indications of an association between each of the data points and one of a plurality of structures; producing a weighting vector responsive to the input dataset, wherein the weighting vector includes a plurality of weighting values and each of the plurality of weighting values is associated with a respective one of the plurality of indications; combining the plurality of indications produced by the plurality of autoencoders based on the weighting vector to provide a weighted combination of the plurality of indications, wherein the weighted combination corresponds to a reconstruction of the input dataset; determining an error between the reconstruction and the input dataset; and adjusting the weighting vector to reduce the error.

In accordance with another aspect, in an embodiment of a method the input dataset represents a mixture of a plurality of features, each of the plurality of features including at least one of a plurality of structures; and wherein each of the plurality of autoencoders is configured to produce a respective one of the plurality of indications to indicate an association of one or more data points of the input dataset with a respective one of the plurality of structures.

In accordance with another aspect, an embodiment of a method as described above further comprises learning the association of the plurality of data points of the input dataset with the plurality of structures responsive to the input dataset and the error, and processing a second dataset including a second plurality of data points to assign each of the second plurality of data points to one of a plurality of data clusters based on the learned association to create a sparse representation of the second dataset.

In accordance with another aspect, an embodiment of a method as described above includes steps of producing the weighting vector, learning the association and processing the second dataset occurring in a machine learning network.

In accordance with another aspect, steps of an embodiment of a method occur in a machine learning network as described above wherein the machine learning network comprises a convolutional neural network.

In accordance with another aspect, steps of an embodiment of a method occur in a machine learning network as described above wherein the machine learning network comprises a deep learning network with a softmax output.

In accordance with another aspect, an embodiment of a method as described above includes producing the weighting vector wherein each of the plurality of weighting values of the weighting vector corresponds to a weight to be applied to a respective one of the plurality of indications produced by the plurality of autoencoders.

In accordance with another aspect, an embodiment of a method as described above includes producing the weighting vector wherein one of the plurality of weighting values of the weighting vector has a value of one and the other ones of the plurality of weighting values have values of zero, thereby producing a one-hot vector as the weighting vector.

In accordance with another aspect, an embodiment of a method as described above provides a function comprising at least one of semi-supervised classification, representation learning, and unsupervised clustering.

In accordance with another aspect, an embodiment of a method as described above further comprises processing information to be provided to a user responsive to the sparse representation to adapt the information provided to the user.

In accordance with another aspect, an embodiment comprises a non-transitory computer-readable medium comprising instructions which, when executed by a computer, cause the computer to carry out any exemplary embodiment of a method as described herein.

### BRIEF DESCRIPTION OF THE DRAWING

The present principles may be better understood in accordance with the following exemplary figures, in which:
FIG. 1 illustrates, in block diagram form, an exemplary embodiment of a processing system or apparatus in accordance with the present principles;
FIG. 2 illustrates, in block diagram form, another exemplary embodiment of a processing system or apparatus in accordance with the present principles;
FIG. 3 illustrates, in block diagram form, another exemplary embodiment of a processing system or apparatus in accordance with the present principles;
FIG. 4 through FIG. 6 illustrate in images and/or block diagram form various aspects of the present principles as described in detail below;
FIG. 7 shows, in block diagram form, an exemplary embodiment of an apparatus in accordance with principles of the present disclosure; and
FIG. 8 shows, in flowchart form, an exemplary embodiment of a method in accordance with principles of the present disclosure.

In the various figures, like reference designators refer to the same or similar features.

### DETAILED DESCRIPTION

The present principles are generally directed to processing data such as for classifying data.

While one of ordinary skill in the art will readily contemplate various applications to which the present principles can be applied, the following description will focus on embodiments of the present principles applied to improving processing of data by systems for applications such as unsupervised learning and clustering of unlabeled data such as unlabeled image data. Such systems and associated improvements in accordance with the present principles may be useful, for example, for providing enhanced user-interface features. As a more specific example, improved processing of data in accordance with the present principles may enable presenting data of interest to a user and, in particular, improving the relevance of the presented data to a user. Such processing may be used in various embodiments and devices in accordance with the present principles such as set-top boxes, gateway devices, head end devices operated by a service provider, digital television (DTV) devices, mobile devices such as smart phones and tablets, etc. However, one of ordinary skill in the art will readily contemplate other devices and applications to which the present principles can be applied, given the teachings of the present principles provided herein, while maintaining the spirit of the present principles. For example, the present principles can be incorporated into any device that has data processing capability. It is to be appreciated that the preceding listing of devices is merely illustrative and not exhaustive.

An aspect of the present disclosure involves an exemplary embodiment for data processing including a processor comprising a plurality of simple autoencoders instead of one complex autoencoder.

In accordance with another aspect, the present principles include recognition that many datasets comprise a mixture of different types of data that individually has significant structure and hence could be well represented by a simple autoencoder. For example, consider the handwritten digits "9" vs. the digits of "1". In accordance with the present principles, a first autoencoder may be configured such that a structure such as a digit "9" is a best fit for the first autoencoder (i.e., the first autoencoder has learned or been trained to provide an indication of the input data including a structure of a digit "9") while a second autoencoder may be configured such that a such as a digit "1" would be a best fit for the second autoencoder (i.e., the second autoencoder has learned or been trained to provide an indication of the input data including a structure of a digit "1"). The results are two simple models that capture the underlying structure of the data.

In accordance with another aspect, in addition to reconstructing the input data, an embodiment comprising a mixture of autoencoders returns an assignment of each input data point to a data cluster, thereby creating a sparse representation of the input data.

In accordance with another aspect, the sparse representation produced may be incorporated into one or more exemplary embodiments including but not limited to semi-supervised classification, representation learning, and unsupervised clustering.

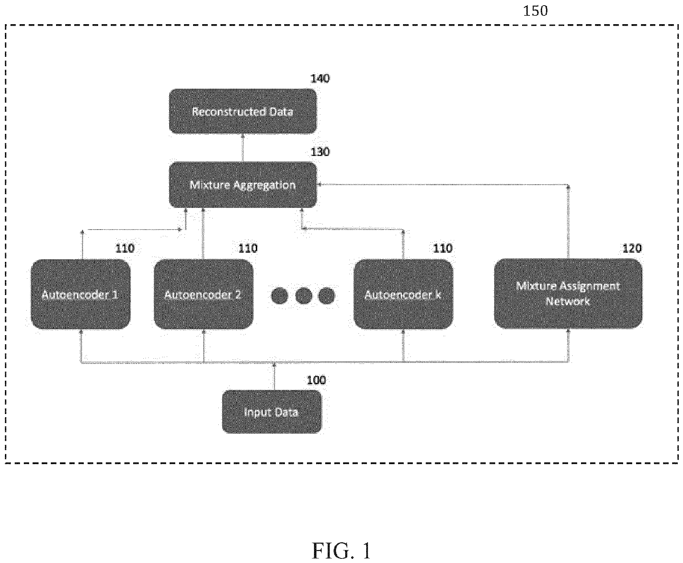

In an embodiment shown in Figure 1, an exemplary system or apparatus 150 in accordance with the present principles includes block 100 that provides input data to system 150. Input data from block 100 could be data such as an image, video, or text document. The input data from block 100 is provided to a plurality k of blocks 110 that may be k individual autoencoders. As is well known in the art, an autoencoder in accordance with the present principles comprises an artificial neural network used for unsupervised learning of efficient codings or representations of a set of data. In accordance with another aspect, autoencoders 110 may comprise a series of k separate deep learning autoencoders. These are structured with a relatively small number of layers and layer sizes. Each of the autoencoders 110 may be specifically designed to represent only a small segment of the possible input data space. That is, each autoencoder may be trained to best fit for one of a plurality of structures included in the input data. Then, each of the plurality of autoencoders 110 processes the input data 100 and produces one of a plurality of outputs. Each of the outputs provides an indication of an association of each of the plurality of data points included in input data 100 with a respective one of the plurality of structures. The plurality of outputs of the autoencoders 110 are fed to or coupled to block 130 illustratively labeled mixture aggregator in Figure 1. Aggregator 130 aggregates, combines or mixes the outputs of autoencoders 110. The operation or aggregation provided by block 130 is controlled by control information or control signals produced by a controller represented as block 120, labeled as Mixture Assignment Network in Figure 1. An embodiment of block 120 may comprise a machine learning network that determines which autoencoder the input data best fits to and produces control information representing this determination. This control information may be described in a numerical vector of length k. In an exemplary embodiment, block 120 may be implemented as a convolutional neural network (CNN) or deep learning network with a softmax output. Block 130 uses the output of each autoencoder (k estimated data points corresponding to the above-described plurality of indications produced by the plurality of autoencoders), considers the control information output by controller or mixture assignment network 120 and determines what should be outputted by block 140. Block 130 may be implemented by using the output of block 120 as a weighting vector of length *k* wherein the *k* component values of the vector correspond to *k* weight values used by block 130 as the weights for a weighted combination of the outputs of the plurality of autoencoders. In an embodiment, the weighting vector may be a one-hot vector. That is, one of the k weight values included in the weighting vector is a "1" and the other values are "0". In effect, this enables or selects the autoencoder corresponding to the "1" as the best fit for the structure of the current data point of the input data. In other embodiments and/or for particular input data, the weighting vector may have multiple non-zero weighting values included among the k components of the weighting vector to include a combination of autoencoder outputs in the weighted combination produced by aggregator 130. The output produced at block 140 following the mixture aggregation at block 130 corresponds to a faithful reconstruction of the input data at block 100.

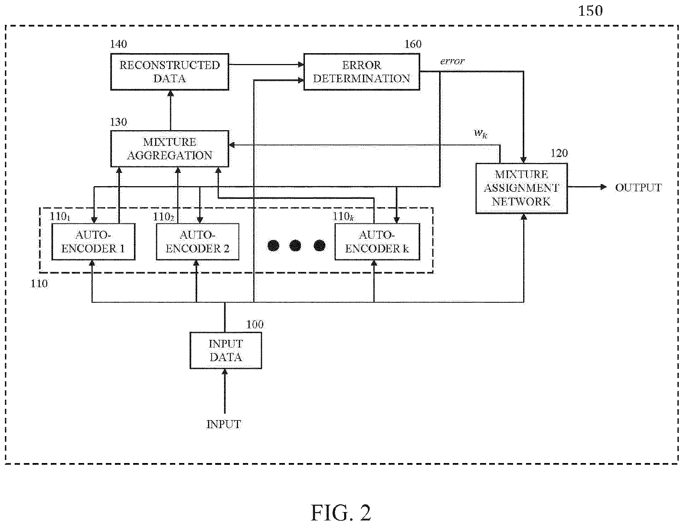

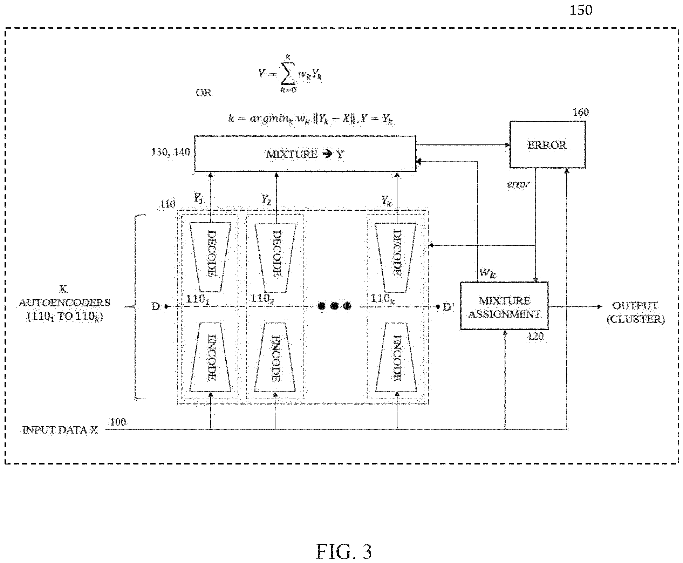

Figure 2 illustrates an exemplary embodiment including features similar to or the same as those of the embodiment of Figure 1 with the addition of an error determination network or module 160 that outputs an error signal, e.g, *error* in Figure 2. Module 160 processes the reconstructed data produced by block 140 and the input data 100 to determine an error. Ideal processing of the input data by an autoencoder should produce reconstructed data at block 140 that is a faithful or accurate representation or reconstruction of the input data. However, as explained further below in regard to Figure 3, an embodiment of an autoencoder in accordance with the present principles produces a reconstruction at block 140 exhibiting an error or difference with respect to the input data. Module 160 determines that difference or error and provides the error determination, e.g., signal *error,* to controller 120 and to the plurality of autoencoders 110 (e.g., comprising autoencoders 110*₁* through 110*ₖ* in Figure 2). Controller 120 and autoencoders 110 processe the error to adjust or modify the weighting vector, e.g., *wₖ* in Figure 2, to reduce the error.

Figure 3 shows another embodiment including features similar to those of the embodiments of Figures 1 and 2 and further shows additional detail. For example, an embodiment of each of the plurality of autoencoders 110, e.g., autoencoders 110*₁* through 110*ₖ* in Figures 2 and 3, may include an encoder and a decoder as shown in Figure 3. The encoder encodes the input data to produce a reduced dimension representation of the input data at position D to D' in Figure 3. The reduced dimension representation is then decoded to produce the output Y*ₖ* of an autoencoder. In accordance with another aspect of the present principles, although not shown in Figure 3 module or network 120 may also receive the reduced dimension signal available at position D to D' in Figure 3.

Adjustment of the weighting vectors to correct for error may occur during a training process. An embodiment such as that of Figures 1, 2 or 3 may be trained using known data such as a collection of known structures as shown in Figure 2 and/or random known images as shown in Figure 3. An example of a collection of such random images is the Cifar 10 image collection known to those skilled in the art (Krizhevsky, Alex, and Geoffrey Hinton. "Learning multiple layers of features from tiny images." (2009). The training enables controller 120 to learn the weighting vector values, i.e., values of w*ₖ* in Figures 2 and 3, that enable aggregator 130 to faithfully reconstruct input data. Following training, controller 120 may process unlabeled input data and produce an output indicating a cluster association or clustering of the input data. Such a clustering provides a sparse representation of the input data.

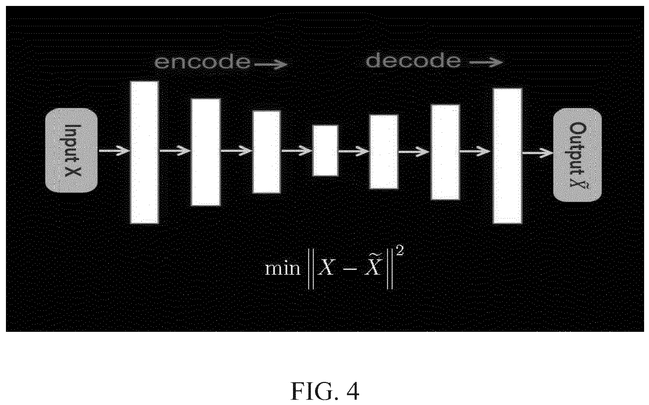

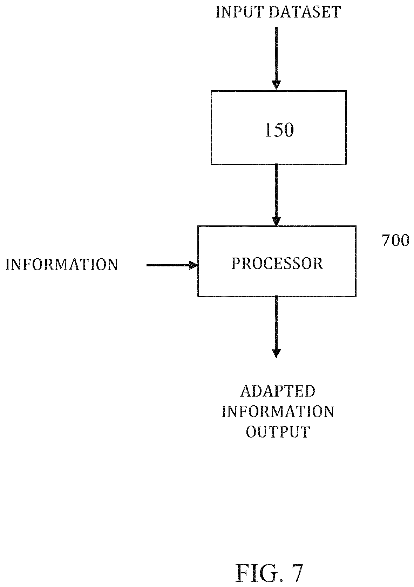

Figure 4 illustrates in block diagram form an exemplary embodiment of a single autoencoder in accordance with the present principles. An autoencoder such as that illustrated in Figure 7 receives input data X and processes X through a plurality of levels or layers of encoding followed by a plurality of layers or levels of decoding to produce an output X̃. The error between input X and output X̃may then be calculated by the formula shown to indicate the potential accuracy of the data classification by the autoencoder.

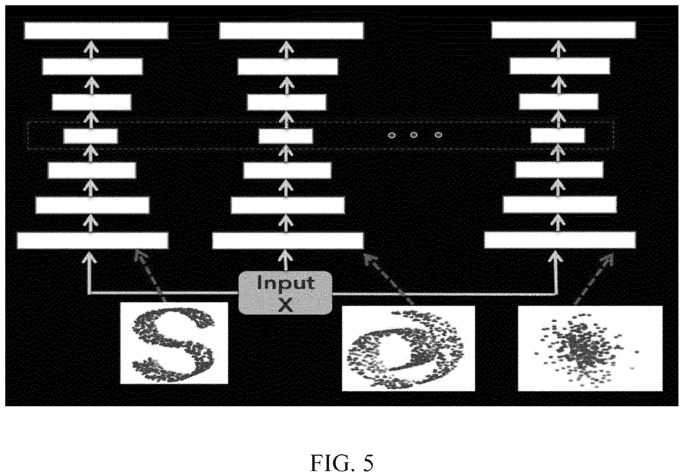

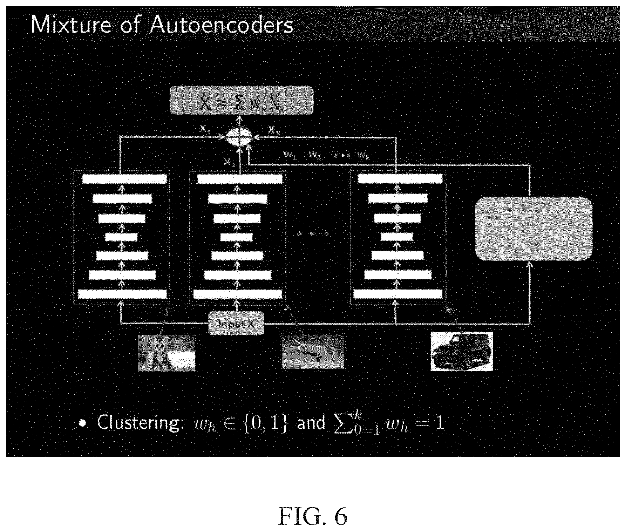

Figures 5 and 6 illustrate exemplary embodiments in accordance with the present principles including a plurality of autoencoders with each autoencoder configured for best fit of a particular type of structure in the input dataset. Each autoencoder includes a plurality of layers or levels of encoding and decoding as illustrated and described with regard to Figure 4. One example of inputs to the autoencoders is shown in Figure 5 where several different types of structures are illustrated. Another example is shown in Figure 6 where several different images are shown, e.g., images from the exemplary Cifar 10 collection as mentioned above. The autoencoder outputs are combined or aggregated or mixed according to control information provided by a mixture controller such as block 120 in Figure 1, 2 or 3 as described above. The output is a weighted combination of the autoencoder outputs where the weighting vector or weighting coefficients for the combination are provided by the mixture controller.

An exemplary embodiment of apparatus in accordance with the present principles is shown in Figure 7. In Figure 7, block 150 corresponds to block 150 in any one of the exemplary embodiments of Figure 1, 2 or 3 and represents an apparatus or system similar to, or providing features and capabilities similar to, the apparatus or system of Figure 1 as described above and will not be described in detail again here. The weighted combination output by block 150 is coupled to processor 700. Processor 700 responds to or processes the weighted combination to adapt information and produce adapted output information. For example, processor 700 may receive or access information intended to be provided to a user, e.g., included in a user interface. Processor 700 may adapt the information provided to the user in response to the clustering provided by block 150 as described above. For example, the system may process image data and provide only information in clusters of interest to a user that are in the image data. Determining "information of interest" may occur, for example, in response to a user profile stored in the system, or in response to user preferences input to the system, or in response to user preferences determined by tracking user actions (e.g., images viewed, content accessed, interactions with friends or contacts via social media). Although the description herein is primarily with regard to processing of image datasets, it will readily apparent to one skilled in the art that the present principles may be applicable to datasets other than image data, e.g., audio data, multimedia data, text recognition and/or translation, etc.

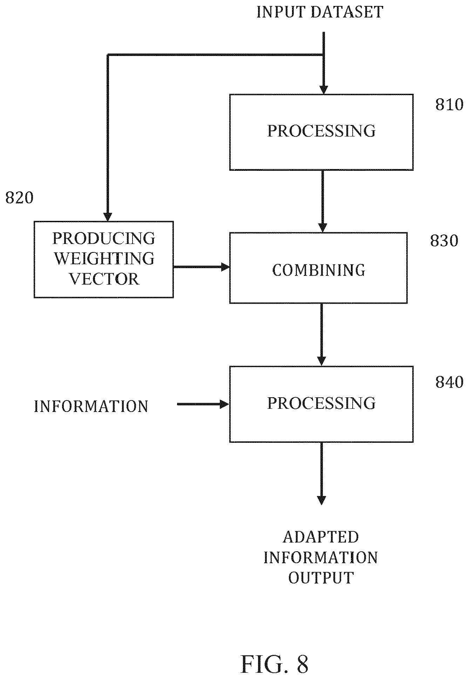

An exemplary embodiment of a method in accordance with the present principles is shown in Figure 8. In Figure 8, at 810 processing of an input dataset occurs in each of a plurality of autoencoders to produce a respective plurality of indications of respective plurality of structures of information included in the input dataset. At 820, a weighting vector is produced responsive to the input dataset. The plurality of indications produced by the plurality of autoencoders are combined at 830 based on the weighting vector to provide a weighted combination of the plurality of indications, wherein the weighted combination indicates the data point of the input dataset is associated with a particular one of a plurality of clusters of information. At 840 processing of information such as user interface information may occur to adapt the information in accordance with the weighted combination, e.g., as explained above with regard to Figure 7 and processor 700.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventor(s) to furthering the art, and are to be construed as being without limitation to such specifically recited examples and conditions. For example, the description herein is primarily in regard to processing of image datasets, but it will readily apparent to one skilled in the art that the present principles may be applicable to datasets other than image data, e.g., audio data, multimedia data, text recognition and/or translation, etc.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

Herein, the phrase "coupled" is defined to mean directly connected to or indirectly connected with through one or more intermediate components. Such intermediate components may include both hardware and software based components.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

It is to be understood that the teachings of the present principles may be implemented in various forms of hardware, software, firmware, special purpose processors, or combinations thereof.

Most preferably, the teachings of the present principles are implemented as a combination of hardware and software. Moreover, the software may be implemented as an application program tangibly embodied on a program storage unit. The application program may be uploaded to, and executed by, a machine comprising any suitable architecture. Preferably, the machine is implemented on a computer platform having hardware such as one or more central processing units ("CPU"), a random access memory ("RAM"), and input/output ("I/O") interfaces. The computer platform may also include an operating system and microinstruction code. The various processes and functions described herein may be either part of the microinstruction code or part of the application program, or any combination thereof, which may be executed by a CPU. In addition, various other peripheral units may be connected to the computer platform such as an additional data storage unit and a printing unit.

It is to be further understood that, because some of the constituent system components and methods depicted in the accompanying drawings are preferably implemented in software, the actual connections between the system components or the process function blocks may differ depending upon the manner in which the present principles are programmed. Given the teachings herein, one of ordinary skill in the pertinent art will be able to contemplate these and similar implementations or configurations of the present principles.

Although the illustrative embodiments have been described herein with reference to the accompanying drawings, it is to be understood that the present principles is not limited to those precise embodiments, and that various changes and modifications may be effected therein by one of ordinary skill in the pertinent art without departing from the scope or spirit of the present principles. All such changes and modifications are intended to be included within the scope of the present principles as set forth in the appended claims.

## Claims

1. Apparatus comprising:
a plurality of autoencoders, each of the plurality of autoencoders receiving an input dataset including a plurality of data points and each of the plurality of autoencoders processing the input dataset to each produce a respective one of a plurality of indications of an association of each of the plurality of data points with a respective one of a plurality of structures;
a controller responsive to the input dataset to provide a weighting vector including a plurality of weighting values each associated with a respective one of the plurality of indications;
an aggregator combining the plurality of indications based on the weighting vector to provide a weighted combination of the plurality of indications, wherein the weighted combination corresponds to a reconstruction of the input data; and
an error module determining an error between the reconstruction and the input data, wherein the controller is responsive to the error to adjust the weighting vector to reduce the error.

2. A method comprising:
processing an input dataset including a plurality of data points in each of a plurality of autoencoders, wherein each autoencoder produces a respective one of a plurality of indications of an association between each of the data points and one of a plurality of structures;
producing a weighting vector responsive to the input dataset, wherein the weighting vector includes a plurality of weighting values and each of the plurality of weighting values is associated with a respective one of the plurality of indications;
combining the plurality of indications produced by the plurality of autoencoders based on the weighting vector to provide a weighted combination of the plurality of indications, wherein the weighted combination corresponds to a reconstruction of the input dataset;
determining an error between the reconstruction and the input dataset; and
adjusting the weighting vector to reduce the error.

3. The apparatus of claim 1, or the method of claim 2, wherein the input dataset represents a mixture of a plurality of features, each of the plurality of features including at least one of the plurality of structures; and wherein each of the plurality of autoencoders is configured to produce a respective one of the plurality of indications to indicate an association of one or more of the data points of the input dataset with a respective one of the plurality of structures.

4. The apparatus of claim 1 or 3 wherein the controller comprises a machine learning network responsive to the input dataset and the error to learn the association of the plurality of data points of the input dataset with the plurality of structures and to process a second dataset including a second plurality of data points to assign each of the second plurality of data points to one of a plurality of data clusters representing a sparse representation of the second dataset.

5. The method of claim 2 or 3 further comprising learning the association of the plurality of data points of the input dataset with the plurality of structures responsive to the input dataset and the error, and processing a second dataset including a second plurality of data points to assign each of the second plurality of data points to one of a plurality of data clusters based on the learned association to create a sparse representation of the second dataset.

6. The method of claim 5 wherein producing the weighting vector, learning the association and processing the second dataset occur in a machine learning network.

7. The apparatus of claim 4, or the method of claim 6, wherein the machine learning network comprises a convolutional neural network.

8. The apparatus of claim 4, or the method of claim 6, wherein the machine learning network comprises a deep learning network with a softmax output.

9. The apparatus of any of the claims 1, 3, 4, 7, or 8, or the method of any of the claims 2, 3, or 5 to 8, wherein each of the plurality of weighting values of the weighting vector corresponds to a weight to be applied to a respective one of the plurality of indications produced by the plurality of autoencoders.

10. The apparatus of any of the claims 1, 3, 4, or 7 to 9, or the method of any of the claims 2, 3 or 5 to 9, wherein one of the plurality of weighting values of the weighting vector has a value of one and the other ones of the plurality of weighting values have values of zero, thereby providing a one-hot vector as the weighting vector.

11. The method of any of claims 2, 3, or 5 to 10, wherein the method provides functions comprising semi-supervised classification, representation learning, and unsupervised clustering.

12. The method of any of claims 5 to 11 further comprising processing information to be provided to a user responsive to the sparse representation to adapt the information provided to the user.

13. The apparatus of any of the claims 1, 3, 4, or 7 to 10, wherein the apparatus is operative to provide functions comprising semi-supervised classification, representation learning, and unsupervised clustering.

14. The apparatus of any of the claims 1, 3, 4, or 7 to 11, further comprising a processor processing information to be provided to a user responsive to the sparse representation to adapt the information provided to the user.

15. A non-transitory computer-readable medium comprising instructions which, when executed by a computer, cause the computer to carry out the method of any of claims 2, 3, or 5 to 12.
